# EUROPÄISCHE PATENTANMELDUNG

(11) **EP 1 087 588 A2**
(43) Veröffentlichungstag der Anmeldung: **28.03.2001**
(21) Anmeldenummer: 00120407.2
(22) Anmeldetag: 18.09.2000
(51) Int. Cl.: H04L 29/06, H04L 29/08

(54) **Modulare und universelle Netzabschlusseinheit mit Service Multiplexing und Interworking**

(30) Priorität: 23.09.1999 DE 19945711
(71) Anmelder: SIEMENS AKTIENGESELLSCHAFT, 80333 München (DE)
(72) Erfinder: Chandan, Das, Dr., 82131 Gauting (DE); Halfmann, Rüdiger, 81359 Pullach (DE); Huber, Manfred, Dr., 82152 Krailling (DE); Möhrmann, Karl-Heinz, 81369 München (DE)

(57) **Zusammenfassung**

Die vorliegende Erfindung betrifft eine modular aufgebaute Netzabschlußeinheit zur Verbindung von einem oder mehreren Endgeräten mit mindestens einem Datenübertragungsnetz, bestehend aus mindestens einem Netzzugangsmodul (1) zum Anschluß an ein Datenübertragungsnetz und/oder mindestens einem Endgeräte-Schnittstellenmodul (2) zum Anschluß eines Endgerätes.

Die erfindungsgemäße Netzabschlußeinheit bietet außerdem die Möglichkeit der parallelen Übertragung von Signalen verschiedener Dienste und die Möglichkeit der Protokollkonversion von Netzübertragungsprotokollen auf Protokolle für verschiedene Endgeräte und umgekehrt. Durch den modularen Aufbau der Erfindung wird eine einfache Erweiterbarkeit und die Wiederverwendung einzelner Komponenten ermöglicht.

## Beschreibung

Die vorliegende Erfindung betrifft eine modular aufgebaute und universell einsetzbare Netzabschlußeinheit zum Anschluß unterschiedlicher Endgeräte mit der Möglichkeit der parallelen Übertragung von Diensten (Service Multiplexing) und Protokollkonversion (Interworking) zum Zwecke der Nachrichten- und Datenübertragung.

Die Verbindung zwischen Netzen zur Nachrichtenübertragung und den Endgeräten erfolgt mittels einer sog. Network Termination, auch Netzabschlußeinheit genannt. Solche Netzabschlußeinheiten sind beim derzeitigen Stand der Technik meist als spezielle Systeme derart aufgebaut, daß nur die Verbindung von einem bestimmten Netzzugang zu einer bestimmten Endgeräteschnittstelle möglich ist (z.B. ISDN-Netzabschlußeinheit, sog. NTBA). Für jede Anwendung muß eine bestimmte Netzabschlußeinheit realisiert werden. Ein flexibler Einsatz bestehender Netzabschlußeinheiten ist daher nicht möglich.

Dies hat den Nachteil, daß bei wechselndem Netzzugang z.B. von Kupferleitungen auf drahtlose Übertragung die komplette Netzabschlußeinheit ausgetauscht werden muß. Außerdem lassen sich bisherige Systeme nicht auf einfache Weise um zusätzliche Schnittstellen erweitern, beispielsweise Ethernet zusätzlich zu einem bestehenden ISDN S₀-Anschluß an einem Netzzugang in der neu entwickelten ADSL-Technik (**A**synchronous **D**igital **S**ubscriber **L**ine).

Aufgabe der vorliegenden Erfindung ist somit, eine Netzabschlußeinheit zur Verbindung von einem oder mehreren Endgeräten mit mindestens einem Datenübertragungsnetz bereitzustellen, die auf einfache und flexible Weise an unterschiedliche Anwendungen angepaßt werden kann.

Diese Aufgabe wird durch eine Netzabschlußeinheit mit den Merkmalen des beigefügten Anspruches 1 gelöst.

Die Erfindungsgemäße, modular aufgebaute Netzabschlußeinheit zur Verbindung von einem oder mehreren Endgeräten mit mindestens einem Datenübertragungsnetz besteht aus mindestens einem Netzzugangsmodul zum Anschluß an ein Datenübertragungsnetz und/oder mindestens einem Endgeräte-Schnittstellenmodul zum Anschluß eines Endgerätes.

Der modulare Aufbau der Netzabschlußeinheit ermöglicht eine Wiederverwendbarkeit von einzelnen Modulen, wie. z.B. gleiches Modul für die Endgeräteschnittstelle bei wechselndem Netzzugang. Dadurch können Netzabschlußeinheiten flexibel und auf den Benutzer abgestimmt aufgebaut werden.

Grundsätzlich sind gemäß Anspruch 1 drei Varianten für den Aufbau der erfindungsgemäßen Netzabschlußeinheit möglich:

In der ersten Variante ist nur der Netzzugang als Modul verwendbar; die Endgeräte-Schnittstellen sind dabei fest in die Netzabschlußeinheit integriert und das Netzzugangsmodul ist für verschiedene Netzzugänge austauschbar.

In einer weiteren Möglichkeit werden die Endgeräte-Schnittstellen modular realisiert, d.h. daß sich die Netzabschlußeinheit beliebig mit Endgeräte-Schnittstellen erweitern läßt, bei gleichbleibendem Netzzugang.

Die flexibelste Lösung ist jedoch, daß sowohl der Netzzugang als auch die Endgeräte-Schnittstellen modular ausgeführt werden um eine Anpassung an die jeweiligen Erfordernisse zu ermöglichen.

Bei der weiteren, vorteilhaften Ausführung der Erfindung wird daher davon ausgegangen, daß sowohl der Netzzugang als auch die Endgeräte-Schnittstellen als Module in der Netzabschlußeinheit realisiert werden.

Vorteilhafte Ausgestaltungen der vorliegenden Erfindung sind in den Unteransprüchen 2 bis 16 angegeben

Die vorliegende Erfindung wird im folgenden anhand bevorzugter Ausführungsbeispiele unter Bezug auf die beigefügten Zeichnungen näher erläutert, in denen zeigen
- Figur 1:: Architektur der Erfindung
- Figur 2:: Aufbau des Netzzugangsmodules
- Figur 3:: Aufbau des Endgeräte-Schnittstellenmodules
- Figur 4:: Ausführungsbeispiel der Erfindung mit Netzzugang "Kupfer"
- Figur 5:: Ausführungsbeispiel der Erfindung mit Netzzugang "Funk"

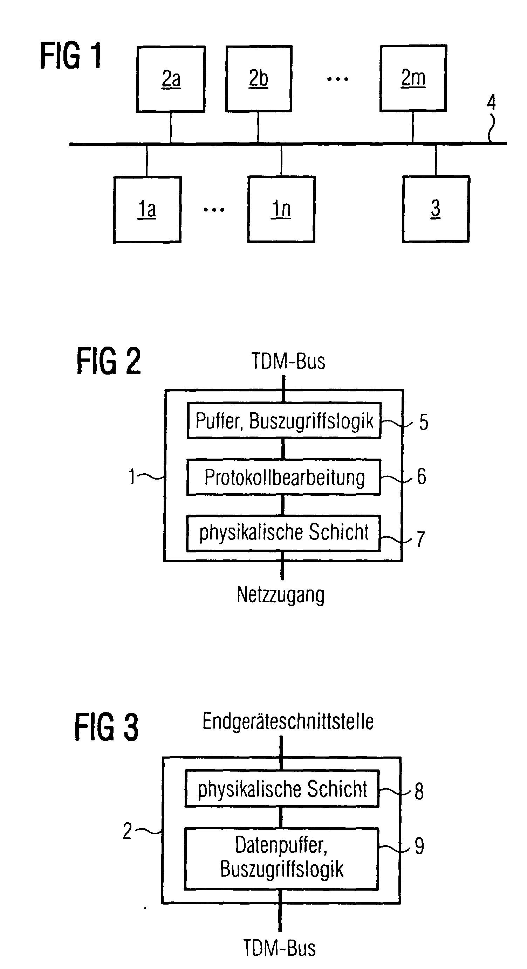

Der allgemeine Aufbau einer modularen Netzabschlußeinheit gemäß der vorliegenden Erfindung und die vorgeschlagene Architektur ist in Figur 1 dargestellt und besteht im wesentlichen aus den folgenden Komponenten:
- 1: Module für den Netzzugang
- 2: Module mit Endgeräte-Schnittstellen
- 3: Steuermodul für den allgemeinen Systembetrieb
- 4: Busstruktur zur Datenübertragung zwischen den Endgeräte-Schnittstellenmodulen und den Netzzungangsmodulen

Das Netzzugangsmodul 1 wird immer als spezifische Lösung, abgestimmt auf den individuellen Netzzugang (wie z.B. Kupferleitugen oder drahtlose Übertragung), ausgeführt. Die Endgeräte-Schnittstellenmodule 2 und das Steuermodul 3 können unabhängig vom gewählten Netzzugang bzw. unabhängig vom gewählten Übertragungssystem verwendet werden. Auf dem Netzzugangsmodul 1 werden Dienstemultiplex, unterstützt durch einen Datenbus 4, z.B. einen TDM-Datenbus, und Protokollkonversion vom Netzprotokoll auf das spezifische Diensteprotokoll und umgekehrt ausgeführt.

In einer ersten vorteilhaften Ausgestaltung der Erfindung ist eine Busstruktur bzw. ein Datenbus 4 vorhanden, über die der Datenaustausch zwischen mindestens einem Netzzugangsmodul 1 und mindestens einem Endgeräte-Schnittstellenmodul 2 stattfindet. Der Datenbus 4 ist in besonders geeigneter Form als synchroner TDM-Datenbus (**T**ime **D**ivision **M**ultiplexing, synchrones Zeitmultiplexverfahren) realisiert. Er besitzt eine Rahmenstruktur mit x Zeitschlitzen. Dabei wird mindestens ein Zeitschlitz für jedes Endgerät zugeordnet, in dem der für das jeweilige Endgerät bestimme Datenaustausch stattfindet.

Über den Datenbus 4 erfolgt der Informationstransfer von den Endgeräte-Schnittstellenmodulen 2 zu den Netzzugangsmodulen 1 und umgekehrt. Für durchschaltevermittelte Verbindungen wird beim Aufbau der Verbindung die geforderte Anzahl an Zeitschlitzen für die Dauer der Verbindung zugeordnet. Die zugehörigen Signalisierungsnachrichten werden als Pakete über den Datenbus transportiert. Der Transport von paketorientierten Daten erfolgt auch über den Datenbus. Für den Datenbuszugriff ist ein geeignetes Zugriffsverfahren auszuwählen.

Als geeignet für den Datentransfer zwischen den einzelnen Modulen könnte sich ein Zugriffsverfahren erweisen, das auf dem Token-Verfahren basiert, d.h. es werden Sendeberechtigungen zyklisch zwischen den Stationen (Modulen) vergeben, um den Zugriff zu koordinieren und um Sendekollisionen zu vermeiden. Die Buskapazität ist hinreichend groß zu wählen und ist abhängig von der Bitrate für den Netzzugang.

Prinzipiell kann auch ein rein paketorientiertes System für den Datenbus verwendet werden. Hierzu sind jedoch für den durchschaltevermittelten Verkehr komplettere Anpassungen notwendig (z.B. Information kommt in äquidistanten Abständen). Bei den nachfolgenden Ausgestaltungen der Erfindung wird daher von einem TDM-Datenbus ausgegangen.

Gemäß der Erfindung stellt das Netzzugangsmodul 1 in einer zweiten vorteilhaften Ausgestaltung der Erfindung die physikalische Schicht 7 für den spezifischen Netzzugang bereit, wie z.B. für eine drahtlose Übertragung im DECT-System (**D**igital-**E**uropean-**C**ordless-**T**elephone, europäischer Standard für schnurlose Telefone). Der schematische Aufbau des Netzzugangsmodules 1 ist in Figur 2 wiedergegeben.

In der physikalischen Schicht werden vor allem die Vorkehrungen für die Übertragung, angepaßt an die elektrischen bzw. optischen (für optische Übertragungssysteme) Eigenschaften des Übertragungssystems, definiert, wie z. B. geeignete Rahmenbildung, Modulation, Maßnahmen zur Fehlersicherung usw.

Das Netzzugangsmodul 1 weist dabei eine Konvertierungseinrichtung 6 auf, mit deren Hilfe das Protokoll des jeweiligen Endgerätes in das Protokoll des verwendeten Übertragungsnetzes und umgekehrt konvertiert wird. Die Protokollkonversion erfolgt in Abhängigkeit von den angeschlossenen Endgeräten, d.h. es muß eine Konvertierung vom Netzübertragungsprotokoll in das Endgeräteprotokoll und umgekehrt stattfinden.

Damit die Konvertierung in Abhängigkeit von den angeschlossenen Endgeräten stattfinden kann, muß dem Netzzugangsmodul 1 bekannt sein, welche Endgeräte an welcher Stelle (Adresse) angeschlossen sind. Dazu steht der Konvertierungseinrichtung 6 ein Speicher zur Verfügung, der diese Informationen permanent, also auch nach dem Ausschalten der Netzabschlußeinheit, speichert. Außerdem sollte der Speicherinhalt veränderbar sein, damit Informationen z.B. über eine Änderung der Konfiguration neu gespeichert werden können.

In einer weiteren vorteilhaften Ausführung der Erfindung ist in dem Netzzugangsmodul ein temporärer Zwischenspeicher 5 vorhanden, in dem die Daten bis zum Versenden beziehungsweise nach dem Empfang und nach Datentypen der Endgeräte sortiert gespeichert werden. Außerdem weist der Zwischenspeicher eine Zugriffslogik auf, die den Datentransfer über den Datenbus 4 regelt.

Bei der Datenübertragung vom Übertragungsnetz zum Teilnehmer erfolgt nach Abschluß der physikalischen Schicht, d.h. die Daten liegen im Netzzugangsmodul 1 bereits vor, die Protokollumsetzung bzw. -konvertierung. Dabei werden die Daten vom Netzprotokoll auf das - für das jeweilige Endgerät spezifische - Protokoll konvertiert. Danach werden die Daten im temporären Zwischenspeicher 5 (Datenpuffer) gespeichert und mittels der auf dem Netzzugangsmodul 1 befindlichen Buszugriffslogik über den Datenbus an das entsprechende Endgeräte-Schnittstellenmodul 2 weitergeleitet. Damit die Daten von dem richtigen Modul für die Endgeräteschnittstelle 2 empfangen werden können, muß das Netzzugangsmodul 1 die Daten adressieren. Dies kann beispielsweise durch definierte Zuteilung von Zeitschlitzen geschehen.

In einer weiteren vorteilhaften Ausgestaltung der Erfindung wird ein Steuermodul 3 in das System integriert. Das Steuermodul 3 ist für den allgemeinen Systembetrieb verantwortlich wie z.B. Takt- und Rahmengenerierung für den TDM-Datenbus; es stellt die Zeitschlitze für die Endgeräte zur Verfügung, in denen die Daten für die jeweiligen Endgeräte übertragen werden.

An dieses Modul kann außerdem z.B. ein lokales Terminal angeschlossen werden, über das notwendige Konfigurationen der Netzabschlußeinheit realisiert werden können. Eine solche Konfiguration kann z.B. die Programmierung der Netzzugangsmodule abgestimmt auf die speziellen Endgeräte enthalten.

In einer weiteren vorteilhaften Ausgestaltung der Erfindung führt das Endgeräte-Schnittstellenmodul 2 auf der Endgeräteseite ausschließlich Funktionen in der physikalischen Schicht aus, d.h. es stellt lediglich die übertragungstechnische Schnittstelle für das jeweilige Endgerät bereit. In diesem Modul werden keine höheren Funktionen wie Protokollbearbeitung ausgeführt. Der Aufbau des Endgeräte-Schnittstellenmoduls ist in Figur 3 dargestellt.

Das Endgeräte-Schnittstellenmodul 2 weist, ebenfalls wie das Netzzugangsmodul 1, einen temporären Zwischenspeicher 9 auf, in dem die zu übertragenden Daten gespeichert werden. Die Daten werden dabei beim Senden zum Netzzugangsmodul 1 zwischengespeichert, bis sie über den Datenbus 4 in den für das jeweilige Endgeräte-Schnittstellenmodul 2 zugeteilten Zeitschlitzen versendet, bzw. die empfangenen Daten an das Endgerät weitergeleitet werden können.

Auch in diesem Fall ist der Zwischenspeicher 9 mit einer Buszugriffslogik gekoppelt, die die Datenübertragung vom Endgeräte-Schnittstellenmodul 2 zum Netzzugangsmodul und umgekehrt steuert.

Beim Informationsfluß vom Teilnehmer zum Übertragungsnetz, die physikalische Schicht der Endgeräteschnittstelle ist dabei abgeschlossen, wird die Information im Datenpuffer 9 des Endgeräte-Schnittstellenmoduls zwischengespeichert. Die ebenfalls in diesem Modul integrierte Buszugriffslogik sorgt für den Datenfluß über den Datenbus an das Netzzugangsmodul.

Die Nachrichten, die das Netzzugangsmodul von den Modulen für die Endgeräte-Schnittstellen erhält, werden im Netzzugangsmodul nach den unterschiedlichen Übertragungsprotokollen sortiert gespeichert, d.h. es findet eine Speicherung z.B. sortiert nach ATM-Zellen und MAC-Protokolldateneinheiten statt.

Nach der Speicherung der Nachrichten erfolgt die Protokollkonversion. Folgendes Beispiel wäre denkbar: Aus dem vom Endgerät kommenden ATM-Zellen werden IP-Nachrichten (**I**nternet **P**rotocol) gebildet, diese werden in PPP (**p**oint-to-**p**oint-**p**rotocol) eingepackt und zum Netz übertragen. Es werden außerdem Signalisierungsnachrichten verarbeitet und die Reservierung von Zeitschlitzen auf dem TDM-Datenbus durchgeführt. Dadurch werden auch interne Verbindungen ermöglicht.

Im Endgeräte-Schnittstellenmodul 2 werden die Daten empfangen, an das Übertragungsmedium für die Endstelle angepaßt (Anpassung an die physikalische Schicht) und danach an das Endgerät weitergegeben. Eine weitere Protokollbearbeitung findet in diesem Modul nicht statt.

Als Beispiele für Endgeräte-Schnittstellen sind folgende Schnittstellen- bzw. Protokolltypen denkbar:
- Ethernet:: MAC-Protokolldateien
- ATM-25:: ATM Zellen
- ISDN S₀:: 2x64 kBit/s B-Kanäle und D-Kanal Schicht 2 Nachricht
- POTS:: Digitalisierung von Analogsignalen und Erzeugung der Signalisierungsnachrichten (**P**lain **O**ld **T**elephone **S**ervice)

Als Besonderheit der Erfindung ist zu nennen, daß mehrere Endgeräte-Schnittstellenmodule 2 des gleichen Typs angeschlossen werden können. Dadurch wird z.B. der Anschluß eines ISDN-Endgerätes ermöglicht, das mehrere S₀-Schnittstellen, wie eine ISDN-Nebenstellenanlage, verwaltet.

Eine weitere Besonderheit der Erfindung ist, daß es prinzipiell Endgeräte-Schnittstellen mit der gleichen physikalischen Schicht, aber Unterschiede in der nächst höheren Schicht geben kann. Daher ist eine Programmierung dieser Module notwendig (z.B. über ein lokales Terminal). Als Beispiel könnte man sich eine breitbandige PC-Schnittstelle vorstellen. Dort könnten über die gleiche Schnittstelle (gleiche physikalische Schicht) z.B. entweder ATM-Zellen oder PPP Protokolldateien transportiert werden.

Grundsätzlich ist es möglich, daß eine Netzabschlußeinheit gemäß der vorliegenden Erfindung mehrere Netzzugangsmodule 1 haben kann. So kann man z.B. aus Gründen der Ausfallsicherheit mehrere solcher Module in einer Netzabschlußeinheit einsetzen, um einen redundanten Netzzugang zu realisieren.

Außerdem läßt sich dieses Prinzip, mehrere Netzzugangsmodule 1 in einer Netzabschlußeinheit zu verwenden, zur Erhöhung der Gesamtkapazität verwenden. In diesem Fall sind jedoch wesentlich aufwendigere, interne Steuerungsmechanismen notwendig.

Die vorliegende Erfindung zeichnet sich dadurch aus, daß durch den modularen Aufbau eine Wiederverwendung der Module für die Endgeräte-Schnittstellen 2 ermöglicht wird, da diese Module unabhängig vom jeweiligen Netzzugang ausgeführt sind; die spezifische Anpassung auf das Übertragungsmedium (Übertragungsnetz) findet ausschließlich im Modul für den Netzzugang statt.

Weiterhin zeichnet sich die vorliegende Erfindung dadurch aus, daß die aufwendigen Funktionen, wie die Protokollkonversion vom Netzprotokoll auf das Protokoll für die Endstelle und umgekehrt, ausschließlich in dem Modul für den Netzzugang 1 bearbeitet werden. Die Module für die Endgeräte-Schnittstellen 2 schließen nur die physikalische Schicht der Endgeräte ab, dadurch ist der Aufbau dieser Module sehr einfach und kostengünstig.

Als Vorteile der vorgestellten modularen Architektur sind weiterhin zu nennen, daß durch den Einsatz von gleichen Endgeräte-Schnittstellenmodulen 2 bei unterschiedlichen Netzzugängen die Herstellungskosten der Module stark reduziert werden können. Es müssen lediglich Module hergestellt werden, die auf die Endgeräteschnittstelle zugeschnitten sind. Dadurch können die Module in hohen Stückzahlen hergestellt werden, was wiederum die Herstellungskosten für die einzelnen Module verringert.

Durch das modulare Konzept wird außerdem eine einfache Integration eines neuen Endgerätes bzw. einer neuen Endgeräte-Schnittstelle ermöglicht. Es muß lediglich das neue Modul für die Endgeräteschnittstelle 2 eingebaut bzw. eingesteckt werden. Die komplette Netzabschlußeinheit muß dabei nicht ausgetauscht werden.

Außerdem ist ein Vorteil der modularen Architektur, daß die Übertragungskapazität, mit der der Netzzugang erfolgt, sehr einfach erweitert werden kann, indem man z.B. ein zweites oder ein anderes Netzzugangsmodul in der Netzabschlußeinheit verwendet.

Dadurch, daß die Konvertierung vom Netzprotokoll auf das Endgeräteprotokoll auf dem Netzzugangsmodul stattfindet, können die Endgeräte-Schnittstellenmodule auch bei einer Änderung der Netzprotokolle oder einer Änderung des Netzzuganges wiederverwendet werden.

Ein weiterer Vorteil der vorgestellten Architektur besteht darin, daß nur einfache Funktionen auf dem Endgeräte-Schnittstellenmodul 2 integriert werden müssen; es wird lediglich auf der Endgeräteseite die physikalische Schicht abgeschlossen. Die aufwendigen Funktionen, wie Protokollkonversion, sind auf einem Modul, nämlich dem Modul für den Netzzugang 1, konzentriert.

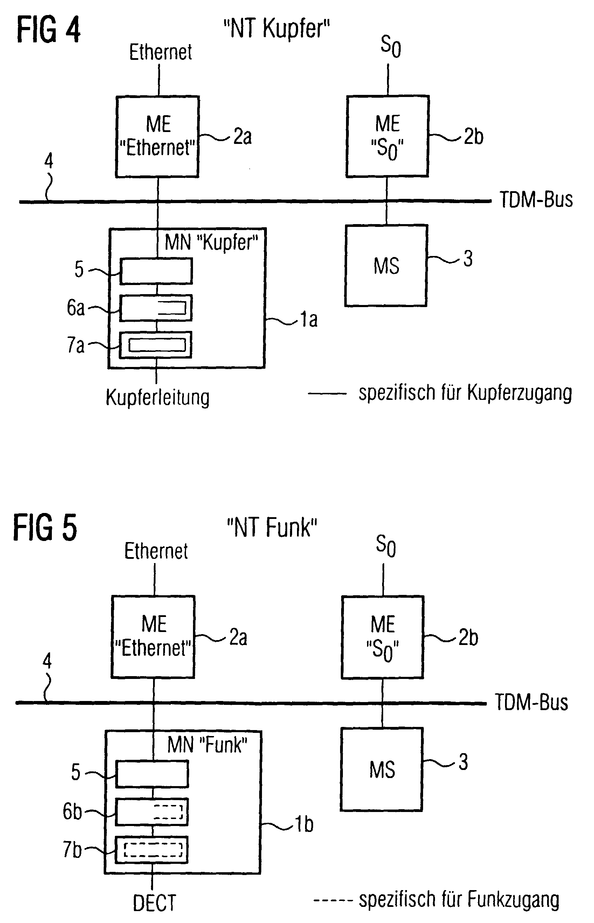

Das Beispiel in Figur 4 zeigt ein Ausführungsbeispiel der Erfindung. Dabei ist die Netzabschlußeinheit für den Netzzugang für Kupferleitungen ("NT Kupfer") ausgeführt. Bei dem Netzzugangsmodul 1a ist die Physikalische Schicht dabei genau auf die Erfordernisse der Kupferleitung angepaßt. Es folgt die Protokollkonversion vom Netzprotokoll "Kupfer" auf das jeweilige Protokoll für die Endgeräteschnittstelle. Umgekehrt findet eine Konvertierung vom jeweiligen Schnittstellenprotokoll auf das spezielle Netzprotokoll (im speziellen Beispiel "Kupfer") statt.

Das Beispiel in Figur 5 zeigt eine weitere Anwendungsmöglichkeit der Erfindung. Hierbei ist der Netzzugang über eine Funkübertragungsstrecke realisiert worden ("NT Funk"). Die physikalische Schicht des Netzzuganges (Netzzugangsmodul "Funk", 1b) ist auf den Übertragungsweg der Funkübertragung ausgelegt. Es folgt wiederum eine Konvertierung der Funkübertragungsprotokolle auf die jeweiligen Protokolle der Endgeräte-Schnittstellen. Umgekehrt findet wiederum eine Konvertierung vom Schnittstellenprotokoll auf das Netzprotokoll statt.

Aus den Beispielen in den Figuren 4 und 5 wird ersichtlich, daß bei unterschiedlichen Netzzugängen nur die Netzzugangsmodule (Netzzugangsmodul "Kupfer" 1a bzw. Netzzugangsmodul "Funk" 1b) unterschiedliche Merkmale aufweisen, da zum einen dort die physikalische Schicht 7a und 7b für die jeweiligen Netzzugänge realisiert wird. Zum anderen findet in dem Modul die Protokollkonvertierung vom Netzzugangsprotokoll auf das Dienstprotokoll für die Endgeräte-Schnittstellen (z.B. Ethernet oder ISDN S₀ statt).

## Patentansprüche

1. Modular aufgebaute Netzabschlußeinheit zur Verbindung von einem oder mehreren Endgeräten mit mindestens einem Datenübertragungsnetz, bestehend aus
mindestens einem Netzzugangsmodul (1) zum Anschluß an ein Datenübertragungsnetz
und/oder
mindestens einem Endgeräte-Schnittstellenmodul (2) zum Anschluß eines Endgerätes

2. Modular aufgebaute Netzabschlußeinheit gemäß Anspruch 1,
**dadurch gekennzeichnet**,
daß eine Busstruktur (4) für den Datenaustausch zwischen dem mindestens einen Netzzugangsmodul (1) und dem mindestens einen Endgeräte-Schnittstellenmodul (2) vorhanden ist.

3. Modular aufgebaute Netzabschlußeinheit gemäß Anspruch 1 oder 2,
**dadurch gekennzeichnet**,
daß das Netzzugangsmodul (1) die physikalische Schicht (7) für den spezifischen Netzzugang bereitstellt.

4. Modular aufgebaute Netzabschlußeinheit gemäß Anspruch 3,
**dadurch gekennzeichnet**,
daß das Netzzugangsmodul (1) eine Konvertierungseinrichtung (6) aufweist, in der das Protokoll des jeweiligen Endgerätes in das Protokoll des Übertragungsnetzes und umgekehrt konvertiert wird.

5. Modular aufgebaute Netzabschlußeinheit gemäß Anspruch 4,
**dadurch gekennzeichnet**,
daß die Konvertierungseinrichtung (6) eine Protokollkonversion abhängig von den angeschlossenen Endgeräten durchführt.

6. Modular aufgebaute Netzabschlußeinheit gemäß Anspruch 5,
**dadurch gekennzeichnet**,
daß die Konvertierungseinrichtung (6) einen permanenten Speicher zum Speichern von Informationen über angeschlossene Endgeräte umfaßt, um die Protokollkonversion abhängig von den angeschlossenen Endgeräten durchführen zu können.

7. Modular aufgebaute Netzabschlußeinheit gemäß einem der Ansprüche 1 bis 6,
**dadurch gekennzeichnet**,
daß in dem Netzzugangsmodul (1) ein temporärer Zwischenspeicher (5) vorhanden ist, in dem die von den Endgeräten empfangenen und zu den Endgeräten gesendeten Daten nach Datentypen der Endgeräte sortiert gespeichert werden, um eine, für das jeweilige Endgerät spezifische, Protokollkonvertierung durchzuführen.

8. Modular aufgebaute Netzabschlußeinheit gemäß Anspruch 7,
**dadurch gekennzeichnet**,
daß der temporäre Zwischenspeicher (5) des Netzzugangsmoduls (1) eine Buszugriffslogik aufweist, die das Versenden und Empfangen der Daten in den für das jeweilige Endgeräte-Schnittstellenmodul (2) zugeteilten Zeitschlitzen über den Datenbus (4) an das beziehungsweise vom Endgeräte-Schnittstellenmodul (2) steuert.

9. Modular aufgebaute Netzabschlußeinheit gemäß einem der Ansprüche 1 bis 8,
**dadurch gekennzeichnet**,
daß ein Steuermodul (3) vorhanden ist, das den allgemeinen Systembetrieb steuert.

10. Modular aufgebaute Netzabschlußeinheit gemäß Anspruch 9,
**dadurch gekennzeichnet**,
daß das Steuermodul (3) die Datenübertragung über den Datenbus (4) zwischen den Netzzugangsmodulen (1) und den Endgeräte-Schnittstellenmodulen (2) steuert.

11. Modular aufgebaute Netzabschlußeinheit gemäß Anspruch 9 oder 10,
**dadurch gekennzeichnet**,
daß das Steuermodul (3) für die Takt- und Rahmengenerierung des Datenbusses (4) verantwortlich ist und Zeitschlitze für die Endgeräte zur Übertragung der Daten zur Verfügung stellt.

12. Modular aufgebaute Netzabschlußeinheit gemäß Anspruch 9, 10 oder 11,
**dadurch gekennzeichnet**,
daß das Steuermodul (3) eine Schnittstelle aufweist, an der ein lokales Terminal zur Programmierung und Konfiguration der Netzabschlußeinheit angeschlossen wird.

13. Modular aufgebaute Netzabschlußeinheit gemäß einem der Ansprüche 1 bis 12,
**dadurch gekennzeichnet**,
daß das Endgeräte-Schnittstellenmodul (2) an der Endgeräte-Schnittstelle ausschließlich Funktionen in der physikalischen Schicht ausführt.

14. Modular aufgebaute Netzabschlußeinheit gemäß Anspruch 13,
**dadurch gekennzeichnet**,
daß das Endgeräte-Schnittstellenmodul (2) einen temporären Zwischenspeicher (9) aufweist, in dem die zu übertragenden Daten gespeichert werden, bis sie in den der Endgeräteschnittstelle zugeteilten Zeitschlitzen versendet werden, bzw. bis die empfangenen Daten an das Endgerät weitergeleitet werden.

15. Modular aufgebaute Netzabschlußeinheit gemäß Anspruch 14,
**dadurch gekennzeichnet**,
daß der in dem Endgeräte-Schnittstellenmodul (2) vorhandene Zwischenspeicher (9) eine Buszugriffslogik aufweist, die die gespeicherten Daten in den für das Endgeräte-Schnittstellenmodul (2) zugeteilten Zeitschlitzen über den Datenbus (4) an das Netzzugangsmodul (1) versendet und vom Netzzugangsmodul empfängt.

16. Modular aufgebaute Netzabschlußeinheit gemäß einem der Ansprüche 2 bis 15,
**dadurch gekennzeichnet**,
daß der Datenbus (4) ein synchroner TDM-Datenbus ist.
